Europäisches Patentamt

European Patent Office

Office européen des brevets

(11) Veröffentlichungsnummer : **0 336 273 B1**

(12) **EUROPÄISCHE PATENTSCHRIFT**

(19)

(45) Veröffentlichungstag der Patentschrift :
**22.02.95 Patentblatt 95/08**

(21) Anmeldenummer : **89105518.8**

(22) Anmeldetag : **29.03.89**

(51) Int. Cl.⁶ : **G01S 13/30, G01S 13/52, G01S 13/22, G01S 13/28**

(54) **Pulsdopplerradar.**

(30) Priorität : **02.04.88 DE 3811283**

(43) Veröffentlichungstag der Anmeldung :
**11.10.89 Patentblatt 89/41**

(45) Bekanntmachung des Hinweises auf die
Patenterteilung :
**22.02.95 Patentblatt 95/08**

(84) Benannte Vertragsstaaten :
**DE FR GB IT NL SE**

(56) Entgegenhaltungen :
**GB-A- 2 075 788**
**US-A- 4 028 699**
**NTZ ARCHIV, Band 10, Nr. 7, Juli 1988, Seiten 171-176, Berlin, DE; H. ROHLINGet al.: "Neues Pulsdoppler-Radar"**
**PROC. IEEE, Band 73, nr. 2, Februar 1985, Seiten 301-311, New York, US; W.H.LONG, III et al.: "Medium PRF for the AN/APG-66 radar"**

(73) Patentinhaber : **Deutsche Aerospace AG**
**D-81663 München (DE)**

(72) Erfinder : **Borchert, Wolfgang, Dipl.-Ing.**
**Franz-Wiedemeierstrasse 99**
**D-7900 Ulm (DE)**
Erfinder : **Rohling, Hermann, Prof. Dr.**
**Am Heller 3a**
**D-3340 Wolfenbüttel (DE)**

(74) Vertreter : **Schulze, Harald Rudolf, Dipl.-Ing.**
**Deutsche Aerospace AG,**
**Patentabteilung,**
**Sedanstrasse 10**
**D-89077 Ulm (DE)**

EP 0 336 273 B1

**Beschreibung**

Die Erfindung betrifft ein Pulsdopplerradar der im Oberbegriff des Patentanspruchs 1 angegebenen Art.

Bei einem Pulsdopplerradar mit intervallweise kohärenter Signalverarbeitung kann durch kohärente Integration der innerhalb eines sogenannten CPI (coherent processing interval) empfangenen Echosignale eine eventuelle Dopplerfrequenzverschiebung $f_D$ der Echosignale gemessen und daraus eine Aussage über die Radialgeschwindigkeit eines Ziels abgeleitet werden. Der Dopplerfrequenzbereich ( $-\dfrac{D_{max}}{2} < f_D < \dfrac{D_{max}}{2}$ ), innerhalb dessen eine eindeutige Messung der Dopplerfrequenz eines Ziels möglich ist, ist durch die innerhalb des Intervalls (CPI) konstante Pulswiederholfrequenz PRF festgelegt zu $D_{max}$ = PRF. Andererseits ist bei der Bestimmung der Zielentfernung R der Entfernungseindeutigkeitsbereich (R < $R_{max}$) gleichfalls durch die Pulswiederholfrequenz bzw. der Pulsabstand PA = 1/PRF begrenzt auf $R_{max}$ = c·PA/2 = c/2·PRF. Die Forderung nach gleichzeitig großen Eindeutigkeitsbereichen für die Entfernung und die Dopplerfrequenz eines Ziels führt daher ganz allgemein zu einem Widerspruch bei der Festlegung der Pulswiederholfrequenz PRF. Für den Sendesignalentwurf eines Pulsradarsystems sind deshalb in Abhängigkeit von der jeweiligen Anwendung Kompromisse in der Festlegung der Pulsfolgefrequenz zu schließen. Üblicherweise wird für die Betriebsart unterschieden zwischen niedriger (LPRF), mittlerer (MPRF) und hoher (HPRF) Pulsfolgefrequenz. Hinsichtlich der praktischen Anwendung von Pulsradarsystemen ist die Unterscheidung zwischen Bodenradarsystemen und Flugzeug-Bordradarsystemen sinnvoll.

In Bodenradarsystemen, z.B. für die Flugüberwachung, werden Sendesignale mit periodisch wiederholten einfachen Rechteck- oder codierten Impulsen eingesetzt. Das charakteristische Merkmal für Bodenradare ist aber eine relativ geringe und i.a. konstante PRF (ca. 1 kHz), so daß die praktisch auftretenden Zielentfernungen mit dem Radar eindeutig gemessen werden. Die Echosignale der Nutzziele konkurrieren bei diesen LPRF Radaren ausschließlich mit dem in der jeweiligen Radarzelle vorkommenden Bodenclutter. Durch eine zeitabhängige Regelung (STC) im Radarempfänger kann der mit hohen Amplituden auftretende Nahebereichsclutter gedämpft werden, ohne dadurch gleichzeitig die Amplituden in den Echosignalen und damit die Entdeckbarkeit weit entfernter Ziele zu reduzieren. In clutterfreien Gebieten des Beobachtungsbereiches ist die Zielentdeckung deshalb lediglich durch das Empfängerrauschen begrenzt.

Bordradarsysteme sind dagegen häufig als sogenannte Multimode-Pulsdopplerradare konzipiert /1,2/. Die Sendesignale sind ebenfalls wie beim Bodenradar aus periodisch wiederholten einfachen Rechteck- oder codierten Impulsen aufgebaut, aber die benutzten Pulsfolgefrequenzen beschränken sich hier nicht auf den LPRF-Bereich (ca. 1 kHz), sondern MPRF (10 - 20 kHz) und HPRF (ca. 200 kHz) werden in Abhängigkeit der jeweiligen Aufgabe (Zielsuche, Trackung) ebenfalls und wechselseitig eingesetzt.

Im Gegensatz zu LPRF-Bodenradaren wird die Zielentfernung im HPRF- bzw. MPRF-Radar nicht oder nicht eindeutig gemessen. Wegen der dabei auftretenden Entfernungsmehrdeutigkeiten wird i.a. keine STC-Regelung in diesen Modi eingesetzt. In diesen Situationen sind aber die Reflexionen an der Erdoberfläche, die über die Antennennebenkeulen in den Empfänger gelangen (Nebenkeulenclutter), i.a. nicht mehr vernachlässigbar, sondern haben eine relativ hohe Echoamplitude. Diese Tatsache führt einerseits unmittelbar zu hohen Anforderungen an die Antennennebenzipfel für Bordradare. Andererseits gewinnt das Problem der Clutter- und Nutzsignaltrennung mit Methoden der digialen Signalverarbeitung durch den Nahbereichs- und Nebenkeulenclutter für MPRF- und HPRF-Radare zusätzlich an Bedeutung.

Aus der GB-A-2 075 788 ist ein Pulsdoppler Radar bekannt, das inbesondere für den HPRF-Mode geeignet ist. Der dort vorhandene geringe eindeutige Entfernungsbereich wird dadurch vergrößert, daß eine Art cyclische Numerierung der Sendeimpulse und damit auch der Empfangsimpulse vorgenommen wird. Dies wird durch eine 7-bit-Phasencodierung der Sendeimpulse mit Empfangsimpulsen verglichen und nur diejenigen mit gleichem Code (Nummer) ausgewertet.

Aufgabe der vorliegenden Erfindung ist daher, ein als Flugzeug-Bordradar mit eindeutiger Zielgeschwindigkeitsmessung geeignetes Pulsdopplerradar anzugeben, mit welchem eine verbesserte Zielentdeckung und Zielparameterschätzung möglich ist.

Die Erfindung ist im Patentanspruch 1 beschrieben. Die Unteransprüche enthalten vorteilhafte Ausführungen und Weiterbildungen der Erfindung.

Zum Vergleich des erfindungsgemäßen Pulsdopplerradars mit bekannten Radaren sei im folgenden als bekanntes System ein HPRF-Radar mit weitgehend eindeutiger Dopplerfrequenzbestimmung zugrunde gelegt und für die Systemparameter eines Ausführungsbeispiels der Erfindung derselbe Dopplerfrequenz-Eindeutigkeitsbereich angenommen. Bei dem erfindungsgemäßen Radar ist die für den Dopplereindeutigkeitsbereich maßgebende Größe die Periodendauer T, so daß die Folgefrequenz der einzelnen Pulse um den Faktor N höher liegt als beim gebräuchlichen HPRF-Radar. Das erfindungsgemäße Pulsdoppleradar ist daher im folgenden kurz mit VHPRF (very high pulse repetition frequency)-Radar bezeichnet.

Sowohl das konventionelle HPRF-Radar wie auch das VHPRF-Radar gestatten eine sehr genaue und eindeutige Messung der Radialgeschwindigkeit entdeckter Nutzziele.

Die Einführung von Entfernungstoren ergibt auch noch nicht ohne weiteres einen Wert für die Zielentfernung, da die Entfernungstorinformation vieldeutig ist. Es besteht insoweit daher noch kein Anlaß, die Pulsfolgefrequenz gegenüber dem gebräuchlichen HPRF-Radar noch weiter zu erhöhen. Als wesentlicher Vorteil des VHPRF-Radars ergibt sich aber zum einen, daß das Signal/Clutter-Verhältnis innerhalb der einzelnen Entfernungstore wesentlich verbessert und dadurch die Zielentdeckungswahrscheinlichkeit bei der nachfolgenden entfernungstorweisen Dopplerverarbeitung deutlich erhöht wird, so daß auch Ziele unter ungünstigen Zielaspektwinkeln, die beim HPRF-Radar von Clutter bedeckt sind, noch entdeckt werden. Zum anderen kann durch Umschaltung der Periodendauer von Intervall zu Intervall und Vergleich der bei unterschiedlichen Periodendauern jeweils vieldeutig gemessenen Zielentfernungen eine über einen großen Entfernungsbereich eindeutige Zielentfernung geschätzt werden. Die sehr hohe Entfernungsauflösung durch die einzelnen Entfernungstore kann u.U. auch als detaillierte Zielinformation zur Zielklassifikation herangezogen werden. Darüber hinaus wird durch die Codierung die Störfestigkeit gegenüber bestimmten Methoden zur absichtlichen Störung erhöht, wozu auch noch die Codierung von Intervall zu Intervall gewechselt werden kann.

Das Tastverhältnis (duty cycle) kann beim VHPRF-Radar wie beim HPRF-Radar gewählt und z.B. auf 40 % eingestellt werden. Dies bedeutet auch, daß im Mittel dieselbe Leistung abgestrahlt wird. Der Effekt des sogenannten Eclipsing, d.h. die teilweise oder vollständige Verdeckung eines Echopulses durch einen Sendepuls, tritt beim HPRF- und beim VHPRF-Radar auf, wobei sich aber in diesem Fall die sehr kurze Pulslänge des VHPRF-Radars dadurch vorteilhaft auswirkt, daß ein durch Eclipsing verdeckter Echopulszug eines Zielechos durch die Relativbewegung von Radaranlage und Ziel nach kürzerer Zeit wieder soweit in den Empfangs-Zeitabschnitt verschoben ist, daß eine zur Zielentdeckung ausreichende Empfangsleistung zur Verfügung steht. Die Pulsfolgefrequenz des HPRF-Radars ist aufgrund der Forderung nach immer eindeutiger Bestimmung der Dopplerfrequenz und damit der Radialgeschwindigkeit eines Ziels bestimmt durch die maximal zu erwartende relative Zielgeschwindigkeit, die in der Situation eines direkt entgegenfliegenden Ziels auftritt (Head-on-Aspekt). Die Pulswiederholfrequenz eines HPRF-Radars liegt daher im Bereich über 100 kHz, typischerweise um 200 kHz. Für den gleichen Geschwindigkeitseindeutigkeitsbereich ist beim VHPRF-Radar die Periodendauer T entsprechend kleiner als 10µs, typischerweise ca. 5µs, zu wählen. Die Pulsfolgefrequenz beim VHPRF-Radar ist gegenüber dem HPRF-Radar dann um den Faktor N (mit N als Codelänge des von Radarperiode zu Radarperiode wiederholten Codeworts) höher. Bei den z.Zt. gebräuchlichen Radarsendern mit zentraler Erzeugung der Sendeleistung und Verteilung auf eine Vielzahl von Strahlerelementen einer Gruppenantenne begrenzt die Erholungszeit des Senders die Pulsfolgefrequenz und damit die Codelänge. Vorzugsweise ist daher eine Sendeantenne mit einer Vielzahl aktiver. Halbleiterbauteile enthaltender Strahlerelemente vorgesehen, die nur sehr kurze Erholungszeiten aufweisen.

Die Erfindung ist im folgenden anhand von Beispielen und unter Bezugnahme auf die Abbildungen noch eingehend veranschaulicht und bekannten Pulsdopplerradars gegenübergestellt. Es zeigt

FIG. 1    Sende- und Empfangssignale eines LPRF-Radars.

FIG. 2    Sende- und Empfangssignale im MPRF-Modus.

FIG. 3    Sende- und Empfangssignale im HPRF-Modus.

FIG. 4    Sende- und Empfangssignale im VHPRF-Modus.

FIG. 5    eine spezielle Kombination von Codierung und Kompressionsfilterfunktion sowie Filtereingangs- und -ausgangssignale.

FIG. 6    ein Blockschaltbild der aufeinanderfolgenden Signalverarbeitungsstufen.

FIG. 7    eine schematische Darstellung des Zusammenwirkens von Pulskompression und Dopplerverarbeitung.

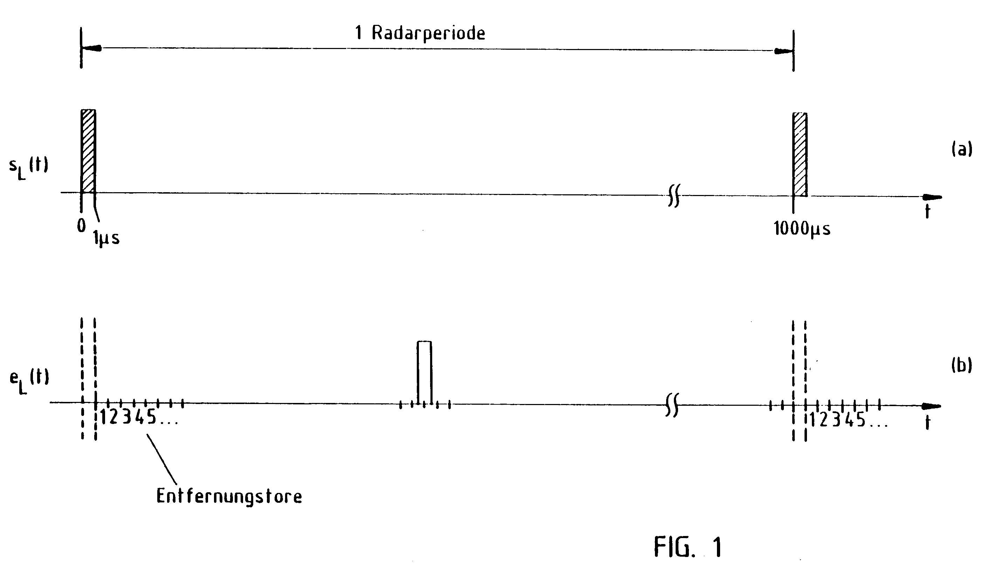

Bei den mit niedriger Pulsfolgefrequenz (LPRF) arbeitenden Bodenradaren wird als Sendesignal s(t) zu Beginn einer Radarperiode ein leistungsstarker kurzer Sendepuls von typischerweise 1µs Pulsdauer abgestrahlt (FIG. 1, (a)). Während der nachfolgenden Empfangsphase werden aus dem Empfangssignal e(t) in Abtastintervallen, die Entfernungstoren zugeordnet sind, Abtastwerte gewonnen. Bei einer typischen Pulsfolgefrequenz von 1 kHz und damit einer Periodendauer von 1ms ergibt sich ein eindeutiger Entfernungsbereich von 150 km. Eine Aufteilung der Empfangszeit in $10^3$ Abtastintervalle ergibt eine Entfernungsauflösung von 150 m. Da die Länge der Abtastintervalle in gleicher Größenordnung wie die Pulsdauer liegen, erscheint ein Zielechoimpuls im Empfangssignal e(t) nur in einem oder wenigen Entfernungstoren und die Zielentfernung kann eindeutig gemessen werden (FIG. 1, (b)). Eine Information über die Geschwindigkeit eines Ziels kann durch Auswertung mehrerer aufeinanderfolgender Radarperioden (Burst) mehrdeutig, durch Wechsel der PRF und Vergleich von Bursts mit unterschiedlicher PRF schließlich auch eindeutig gewonnen werden.

Demgegenüber ist bei Bordradarsystemen die Zielgeschwindigkeit ein wichtiges Unterscheidungsmerkmal zwischen Zielen und Clutter. Außerdem steht nur eine vergleichsweise geringe Sendeleistung zur Verfü-

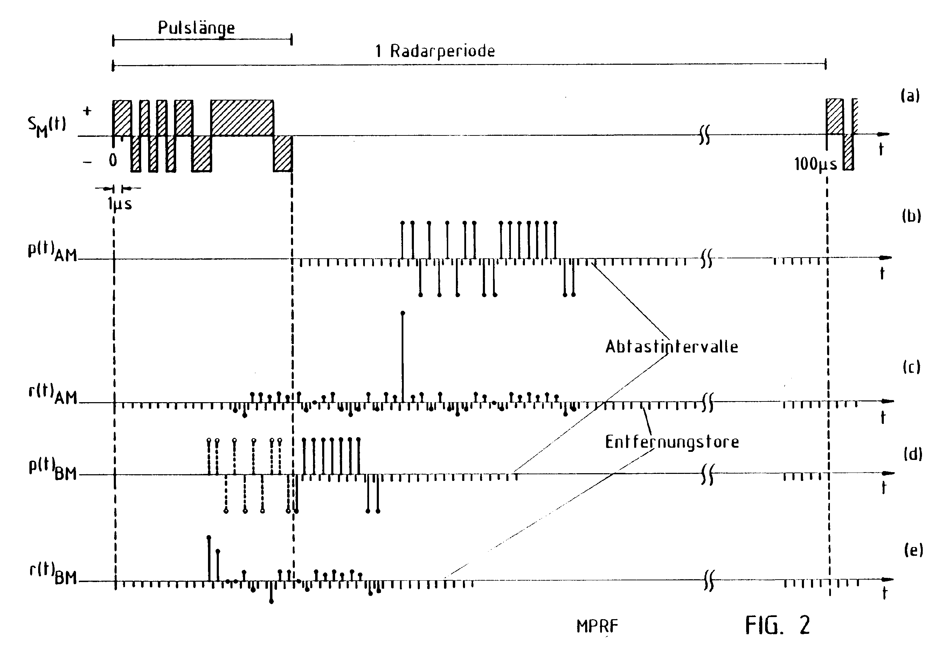

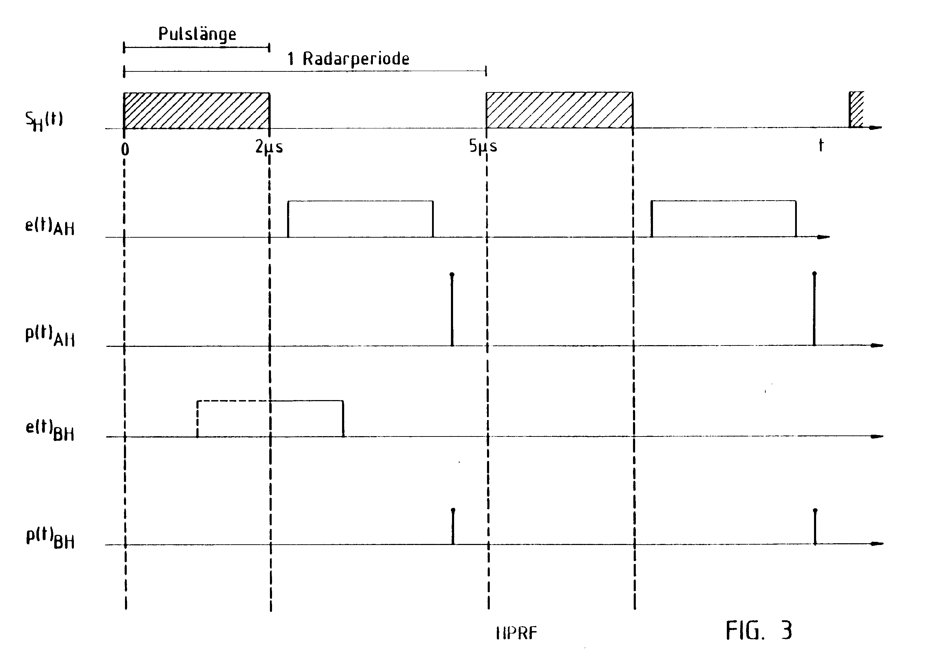

gung, so daß die Sendesignalform des LPRF-Radars nicht übernommen werden kann. Nachfolgend sind daher auch Beispiele für die bei Bordradar gebräuchlichen Betriebsarten mit mittlerer (MPRF, FIG. 2) und hoher (HPRF, FIG. 3) Pulsfolgefrequenz beschrieben.

Das Sendesignal eines typischen HPRF-Radars (FIG. 3, (a)) besteht aus einfachen Rechteckimpulsen (z.B. Pulslänge $\tau$ = 2$\mu$s), die bei fester Sendefrequenz in sehr kurzen Zeitabständen (Pulsabstand PA = Dauer T einer Radarperiode = 5$\mu$s bei 200 kHz PRF) periodisch wiederholt werden. Das resultierende Tastverhältnis

$$TV = \tau/PA$$

ist in diesem als Beispiel anzusehenden HPRF-Sendesignal gleich 40 %.

Das zugehörige Echosignal e(t) (Fig. 3, (b)) wird im Radarempfänger mit einem Puls-Matched-Filter verarbeitet und in jeder Radarperiode ein- oder zweimal (entsprechend der Signalbandbreite) abgetastet. Die in einer Vielzahl aufeinanderfolgender Radarperioden gewonnenen Abtastwerte werden einer Dopplerverarbeitung zur Zielentdeckung und zur Schätzung der Zielgeschwindigkeit unterzogen. In diesem Fall entstehen keine Informationen über die Zielentfernung. Mehrzielsituationen können dann nur über die Radialgeschwindigkeit aufgelöst werden.

Durch das Tastverhältnis von 40 % liegen die Echosignale nur mit geringer Wahrscheinlichkeit vollständig in den Empfangsabschnitten zwischen je zwei Sendeimpulsen (FIG. 3, (b), Empfangssignal e(t)$_A$). Überwiegend sind die Zielechosignale teilweise von den Sendesignalen verdeckt, was als Eclipsing bezeichnet wird. Eine Situation mit einem teilweise verdeckten Echosignal e(t)$_B$ ist in FIG. 3 (d) skizziert, der verdeckte Teil des Echosignals ist als unterbrochene Linie angedeutet. Entsprechend der geringeren Echosignalenergie im Abtastzeitraum sind die im Fall der FIG. 3 (d) gewonnenen Abtastwerte p(t)$_B$ (FIG. 3 (e)) schwächer als die aus dem unverdeckten Echosignal e(t)$_A$ gewonnenen Abtastwerte p(t)$_A$ in FIG. 3, (c). Da der Rauschanteil im Empfangssignal in beiden Fällen als gleich anzunehmen ist, ist offensichtlich, daß die Zielentdeckung mit zunehmendem Eclipsing schwieriger wird.

Bodenclutterechos, die über die Antennenhaupt- oder -nebenkeulen in den Radarempfänger gelangen, machen sich beim HPRF-Bordradar im Dopplerfrequenzbereich bis zur Eigengeschwindigkeit des Radars über Grund bemerkbar. Das einzige Unterscheidungsmerkmal zwischen Bodenclutter und Nutzzielen ist dann also die Dopplerfrequenz, so daß weit entfernte (schwache) Nutzziele i.a. nur im clutterfreien Bereich auf der Dopplerfrequenzachse entdeckt werden können und das sind Flugziele, die sich auf das Radar zubewegen (Head on Aspect). Durch eine kohärente Signalauswertung können solche Nutzziel- und Clutterechos vollständig voneinander getrennt und dadurch das Detektionsproblem auf eine relativ einfache Zielentdeckung im Rauschen reduziert werden.

In der Zielsuchphase legen Bordradarsysteme i.a. den Schwerpunkt auf eine eindeutige Dopplerfrequenzschätzung, weil die jeweilige Zielgeschwindigkeit ein wichtiges Erkennungs- und Unterscheidungsmerkmal zwischen Flug- und z.B. Störobjekten (Clutter) ist. Mit dem oben beschriebenen Sendesignal und einem X-Band-Radar können Radialgeschwindigkeiten heutiger Flugzeuge eindeutig gemessen werden. Wegen des hohen Tastverhältnisses (TV) und dem daraus resultierenden Integrationsgewinn in der digitalen Signalverarbeitung (Dopplerfilterbank, FFT) entsteht eine große Zielentdeckungsreichweite für die auf das Radar zufliegenden Ziele. Allerdings wird mit dem HPRF-Radar keine Information über die jeweilige Zielentfernung gemessen.

Echosignale der Ziele, die sich vom Radar wegbewegen (Tail Aspect), überlagern sich additiv mit den gleichzeitig aus dem Nahbereich über die Antennennebenkeulen empfangenen (relativ starken) Bodenclutterechos, befinden sich also mit anderen Worten nicht im clutterfreien Bereich auf der Dopplerfrequenzachse und werden mit dem hier skizzierten HPRF-Radar und bei weit entfernten (schwachen) Zielen aufgrund des i.a. niedrigen Signal-zu-Clutter(S / C)-Verhältnisses nicht oder nur mit geringer Wahrscheinlichkeit entdeckt. Wegen dieser wesentlichen Einschränkung beim HPRF-Radar ist bei Bordradaren üblicherweise zusätzlich die Betriebsart mit mittlerer Pulsfolgefrequenz vorgesehen.

Das Sendesignal eines typischen MPRF-Radars besteht aus rechteckförmigen Impulsen, die zusätzlich eine Phasencodierung enthalten. Als Beispiel ist in FIG. 2 ein MPRF-Sendesignal s(t) mit einer Pulswiederholfrequenz von 10 kHz entsprechend einem Pulsabstand von 100$\mu$s und einer Pulslänge von 20$\mu$s angenommen, was ein Tastverhältnis (duty cycle) von 20 % bedeutet.

Der Sendeimpuls ist binär phasencodiert (+/-) nach einem Codewort mit 20 Codestellen entsprechend einer Subpulslänge von 1$\mu$s. Die Empfangssignale werden zwischen zwei Sendeimpulsen in Abtastintervallen von der Länge eines Subpulses abgetastet. Die Abtastwerte p(t) werden über ein Kompressionsfilter geführt. Die Filterausgangssignale können als nach Entfernungstoren sortierte Echosignale weiterverarbeitet werden, wozu wiederum die Signale aus einer Mehrzahl aufeinanderfolgender Radarperioden einer Dopplerverarbeitung unterzogen werden. Falls das Echosignal vollständig in dem Empfangszeitraum zwischen zwei Sendepulsen liegt, ergeben sich die in FIG. 2 (b) skizzierten Abtastwerte p(t)$_A$, die nach Korrelation z.B. mit einem Matched-Filter im Pulskompressionsfilter zu dem in FIG. 2 (c) dargestellten Filterausgangssignal führen. Dieses Filterausgangssignal liefert einen hohen Wert (Hauptwert) in einem Entfernungstor und eine Mehrzahl kleinerer Werte (Nebenwerte) in benachbarten Entfernungstoren.

Wenn jedoch das Echosignal teilweise durch einen Sendepuls verdeckt ist (Eclipsing), so ergibt sich bei den aus dem Empfangssignal gewonnenen Abtastwerten $p(t)_B$ nur noch ein verstümmeltes Codewort. Eine solche Situation mit einer Verdeckung von 50 % zeigt FIG. 2 (d). Die den vom Sendesignal verdeckten Echosignalanteilen entsprechenden fehlenden Abtastwerte sind durch unterbrochene Linien und offene Kreise angedeutet. Das zugehörige Ausgangssignal des Pulskompressionsfilters zeigt FIG. 2 (e). Neben der verringerten Zielentdeckungswahrscheinlichkeit wegen des niedrigeren Hauptwertes des komprimierten Signals ergeben sich gravierende Probleme durch die bei Kompression des nicht vollständigen Echosignals stark anwachsenden Nebenwerte im komprimierten Signal, die zu Falschzielmeldungen in anderen Entfernungstoren führen können. Die Wahrscheinlichkeit für Eclipsing-Situationen steigt mit zunehmendem Tastverhältnis. Üblicherweise wird daher bei MPRF-Radaren, abweichend vom skizzierten Beispiel, ein geringeres Tastverhältnis gewählt. Für den Bereich in der ersten Hälfte des Sendeimpulses werden wegen des schlechten Kompressionsergebnisses in der Regel überhaupt keine Werte für r(t) gebildet.

Die Unterscheidung von Nutzziel- und Clutterechosignalen kann im MPRF-Radar auch aufgrund der jeweiligen Objektentfernung vorgenommen werden, ein Unterscheidungsmerkmal, das im HPRF-Radar i.a. nicht gemessen und ausgewertet wird. Aber allein aufgrund des wesentlich geringeren Tastverhältnisses im MPRF-Radar verringert sich die Zielentdeckungsreichweite im Rauschen.

Die wesentlichen Vorteile des MPRF-Radars bestehen darin, daß durch die Einführung von Entfernungstoren sowohl eine Entdeckung und Entfernungsmessung von Tail-Aspekt-Zielen möglich ist, allerdings nur in den Situationen, in denen das Echosignal des Nutzzieles in einem (fast) clutterfreien Bereich auf der Entfernungsachse liegt. Andererseits kann mit einem MPRF-Radar weder die Zielentfernung noch die Dopplerfrequenz im gesamten Beobachtungsbereich eindeutig gemessen werden. In beiden Koordinaten treten Mehrdeutigkeiten auf, die durch die PRF-Festlegung bestimmt sind. Diese Mehrdeutigkeiten auf der Entfernungs- und/oder Dopplerfrequenzachse können mit Signalverarbeitungstechniken wieder aufgelöst werden, wenn das Ziel (die Ziele) in benachbarten Signalblöcken (CPI) mit gering unterschiedlicher PRF entdeckt wurde(n). Ein weiterer Nachteil des MPRF-Radars besteht darin, daß die Nutzziele, die auf das Radar zufliegen und die mit einem HPRF-Radar problemlos entdeckt werden können, im MPRF-Radar häufig nicht entdeckt werden, weil die im Echosignal enthaltene hohe Dopplerfrequenz zu extrem großen Störungen (bis hin zur vollständigen Ausblendung) im Pulskompressionsfilter führen kann.

Im Sinne der obigen Systembeurteilung ergänzen sich MPRF und HPRF Modi bei der Zielentdeckung und Parameterschätzung. Aber die Vorteile der einzelnen Modi beschränken sich auf unterschiedliche Zielsituationen bzw. Anwendungen. Diese Tatsache ist mit ein Grund dafür, daß heutige Bordradare häufig als Multimode-Systeme aufgebaut sind, um somit eine hohe Leistungsfähigkeit des Systems unter allen Zielaspektwinkeln zu erzielen. Andererseits führt die Umschaltung zwischen den verschiedenen Betriebsarten (MPRF und HPRF) bei einem Multimode-Radarkonzept zu nicht unerheblichen Verlusten in der Leistungsfähigkeit des Gesamtsystems.

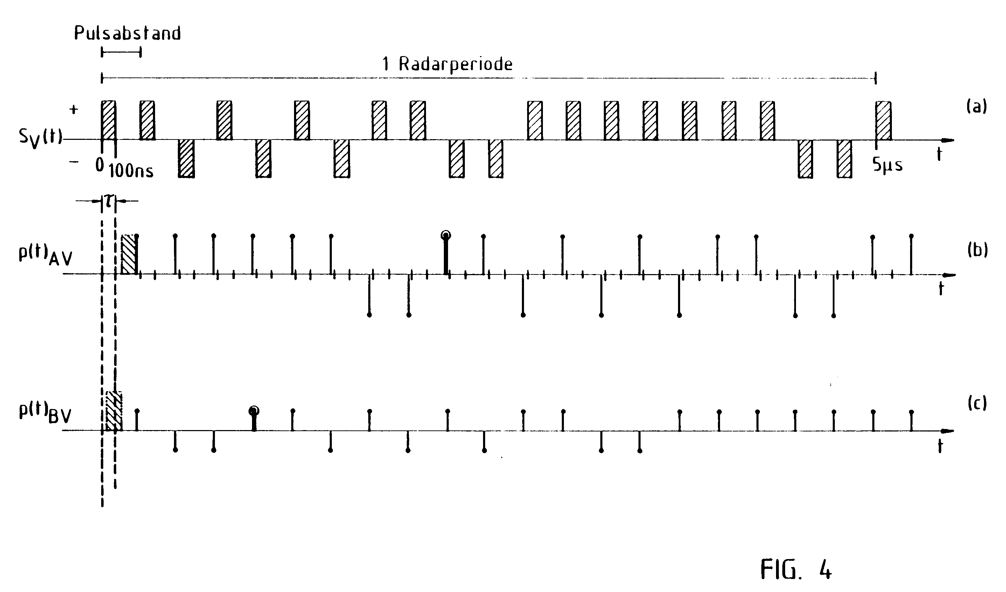

In FIG. 4 sind Sende- und Empfangssignale eines erfindungsgemäßen Pulsdopplerradars skizziert. Dabei wird eine Radarperiode, die im Beispiel wie beim HPRF-Radar (FIG. 3) die Länge T = 5µs habe, äquidistant in N Teilintervalle unterteilt und in jedem Teilintervall ein Rechteckimpuls sehr geringer Länge (entsprechend hoher Bandbreite) abgestrahlt. Die Rechteckimpulse sind zusätzlich von Puls zu Puls phasencodiert, wobei zum anschaulicheren Vergleich dasselbe Codewort wie beim MPRF-Radar gewählt ist. Die einzelnen Rechteckpulse sind zeitlich isoliert, so daß sich zwischen je zwei Sendepulsen ein sendesignalfreier Zeitabschnitt ergibt, in welchem jeweils ein Abtastwert aus dem Empfangssignal gewonnen wird. Durch die gleichmäßige Unterteilung der Radarperioden und die periodische Wiederholung der Puls-zu-Puls Codierung in jeder Radarperiode ergibt sich als Sendesignal s(t) eine nach einem zyklischen Code phasencodierte Impulsfolge mit dem Impulsabstand $PA = \dfrac{T}{N}$ bzw. einer gegenüber dem HPRF-Radar mit gleicher Radarperiodendauer um den Faktor N höheren Pulsfolgefrequenz. Das Tastverhältnis aus Pulslänge τ der Einzelpulse und Pulsabstand PA sei wie im HPRF-Beispiel zu 40 % gewählt, woraus dieselbe Leistungsfähigkeit in reinen Rauschsituationen resultiert. Das n FIG. 4 (a) skizzierte VHPRF-Sendesignal s(t) besteht dann aus einer Folge von Einzelimpulsen der Länge 100 ns im Pulsabstand 250ns, wobei die Pulsfolge eine periodische Puls-zu-Puls Phasencodierung der Periodendauer 5µs aufweist. Von einem Ziel reflektierte Echosignalanteile führen dann bei der Abtastung der Empfangssignale zwischen je zwei Sendepulsen zu einer Folge von Abtastwerten, die gleichfalls mit der Dauer einer Radarperiode, d.h. mit der Länge eines Codeworts, periodisch ist. Die relative zeitliche Lage der periodischen Abtastwertfolge bezüglich der periodischen Sendepulsfolge ist von der Zielentfernung abhängig, so daß umgekehrt durch Bestimmen dieser relativen zeitlichen Lage mittels Impulskompression der periodischen Abtastwertfolge eine Information über die Zielentfernung gewonnen werden kann. Wegen der Periodizität ist die Aussage nur innerhalb eines der Radarperiodendauer T gleichen Signallaufzeitbereichs bzw. eines diesem entsprechenden Zielentfernungsbereichs $R_{max}$ = c/2T eindeutig. Innerhalb dieses Eindeutigkeitsbereichs ist die Entfernungsauflösung $\Delta$R durch die diskrete Aufteilung der Radarperiode in N Teilintervalle zu $\Delta$R = c/2NT gegeben. Bei dem gewählten Beispiel ergibt sich der Entfernungseindeutigkeitsbereich zu 750 m und die Entfernungsauflösung zu 15 m. Es ist leicht ersichtlich, daß ein Entfernungseindeutigkeitsbereich von 750 m bei einer Radarreichweite von rund 100 km noch keine vernünftige Aussage über die tatsächliche Zielentfernung zuläßt. Durch Umschaltung der Radarperiodendauer von Verarbeitungsintervall zu Verarbeitungsintervall ergeben sich jedoch unterschiedliche, jeweils für sich vieldeutige Zielentfernungswerte innerhalb des jeweiligen Eindeutigkeitsbereichs, aus denen nach bekannten Verfahren /3,4/ eine über einen großen Entfernungsbereich eindeutige Zielentfernung bestimmt werden kann.

Die Korrelation der periodischen Abtastwertfolge mit der Filterfunktion des Pulskompressionsfilters führt wiederum zu einer periodischen Korrelationsfunktion als Filterausgangssignal. Das Filter kann als Matched-Filter oder als Mismatched-Filter ausgeführt sein. Gemäß einer vorteilhaften Weiterbildung der Erfindung sind für die Puls-zu-Puls Codierung bei an sich beliebiger Codelänge N solche Codeworte $\underline{c}$ mit Codewerten $c_i$ (i = 0, 1 ... N-1) vorgesehen, in deren über diskrete Fourier-Transformation zugeordnetem Spektrum für alle Spektralwerte $Z_n$ das Betragsquadrat

$$|Z_n|^2$$

ungleich Null ist. Bei Kompression der nach einem solchen Codewort zyklisch codierten Impuls- bzw. Abtastwertfolge in einem Mismatched-Filter mit den Filterkoeffizienten

$$w_k = F \cdot \sum_{n=0}^{N-1} \left\{ \frac{1}{|Z_n|^2} \sum_{p=0}^{N-1} c_p \cdot \exp(j \cdot 2\pi \cdot \frac{n}{N} \cdot p) \right\} \cdot \exp(j \cdot 2\pi \cdot \frac{n}{N} \cdot k)$$

$$(k = 0.1 \ldots N-1)$$

$$(F = konstant)$$

ergibt sich als Filterausgangssignal die periodische Kreuzkorrelation mit lauter verschwindenden Nebenwerten.

Bei gegebener Impulsfolge $\underline{c}$ der Länge N mit den binären Codestellen $c_i$ wird vorteilhafterweise in einem ersten Schritt mittels der diskreten Fourier-Transformation das zugehörige DFT-Spektrum mit den Spektralkoeffizienten

$$Z_n = \frac{1}{N} \sum_{l=0}^{N-1} c_l \cdot \exp\left(-j \cdot 2\pi \cdot \frac{n}{N} l\right)$$

und durch Multiplikation mit dem konjugiert komplexen Wert $Z_n^*$ auch die Betragsquadrate der Spektralkoeffizienten

$$|Z_n|^2 = \frac{1}{N^2} \sum_{l=0}^{N-1} \sum_{m=0}^{N-1} c_l \cdot c_m \cdot \exp\left(-j \cdot 2\pi \cdot \frac{n}{N} (l-m)\right)$$

ermittelt. Wenn für alle n gilt

$$\left| Z_n \right|^2 \neq 0,$$

kann für die vorgegebene Impulsfolge ein Kompressionsfilter erfindungsgemäß dimensioniert werden. Zur quantitativen Ermittlung der Koeffizientenwerte $w_k$ des Kompressionsfilters werden unter Rückgriff auf die bereits ermittelten Spektralwerte $Z_n$ der Impulsfolge bzw. deren konjugierte komplexe Werte $Z_n^*$ und Beträge $Z_n^2$ zuerst die Werte

$$\dot{w}_n = \frac{1}{F} \cdot \frac{Z_n^*}{\left| Z_n \right|^2}$$

$$(n = 0, 1, 2 \ldots N-1).$$

die zusammen wiederum als ein Spektrum betrachtet werden können, gebildet und aus diesen N Werten werden mittels einer inversen diskreten Fourier-Transformation unmittelbar die N Filterkoeffizienten

$$w_k = F \cdot \sum_{n=0}^{N-1} W_n \cdot \exp\left(j \cdot 2\pi \cdot \frac{n}{N} \cdot k\right)$$

$$(k = 0, 1, 2 \ldots N-1)$$

gebildet, wobei der für alle k gleiche konstante Faktor F im Grunde willkürlich gewählt werden und damit z.B. zur Normierung auf ganzzahlige Koeffizientenwerte oder auf einen maximalen Koeffizientenwert dienen kann. Die einzelnen Schritte des aufgezeigten Berechnungswegs sind eindeutig, so daß sich daraus bei gegebener Impulsfolgencodierung die Werte für die Filterkoeffizienten eindeutig ergeben. Äquivalente Wege zur Berechnung der Filterkoeffizienten, z.B. über die Lösung eines linearen Gleichungssystems, sind möglich und führen zu denselben Koeffizientensätzen, die durch die erfindungsgemäße Lehre quantitativ festgelegt sind.

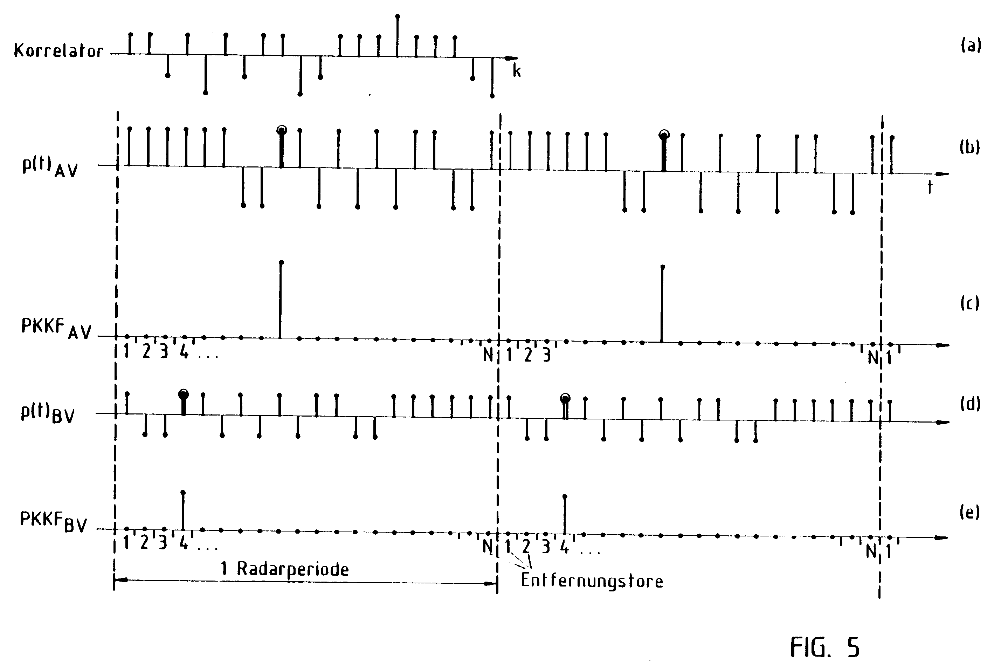

Für das aus FIG. 4 (a) ersichtliche Codewort innerhalb einer Radarperiode sind in FIG. 5 (a) aus Gründen der Anschaulichkeit die Korrelatorgewichte $w_k'$, die den nach vorstehend angegebener Vorschrift eingestellten Filterkoeffizienten $w_k$ des Pulskompressionfilters entsprechen, eingetragen.

Auch bei dem erfindungsgemäßen VHPRF-Pulsdopplerradar stellt sich selbstverständlich das bereits beschriebene Problem des Eclipsing. In Fig. 4 ist für eine Signalsituation mit unverdeckten (b) und mit zur Hälfte verdeckten (c) Echosignalen die sich bei der Abtastung jeweils ergebende Folge von Abtastwerten eingetragen. Beispielhaft ist jeweils ein Echopuls in seiner relativen zeitlichen Lage bezüglich des ersten Sendepulses des dargestellten Signalausschnitts eingetragen. In den Abtastwertfolgen ist jeweils der dem ersten Sendeimpuls eines Codewortes entsprechende Echoimpuls herausgehoben markiert. Bei den beiden Signalsituationen sind außerdem verschiedene Signallaufzeiten, d.h. verschiedene Zielentfernungen, zugrunde gelegt.

Wie bereits bei der Beschreibung des HPRF-Radars (FIG. 4) erläutert, führt die teilweise Verdeckung eines Rechteckimpulses zu einer gegenüber der eclipsing-freien Situation geringeren Amplitude des Abtastwertes. Wesentlich im vorliegenden Fall ist aber, daß die Phasenbeziehungen auch bei einer teilweisen Verdeckung vollständig erhalten bleiben und in die (komplexen) Abtastwerte eingehen. Da innerhalb einer Radarperiode ($5\mu s$) keine meßbare Veränderung der Eclipsing-Situation erfolgt, ist die dadurch bewirkte Amplitudenverminderung für alle Abtastwerte gleich. Da die Phasenbeziehungen erhalten bleiben, bleibt auch die Codierung der Abtastwertfolge vollständig. Bei der Pulskompression führt dies dazu, daß lediglich alle Werte des Filterausgangssignals linear verringert sind.

In FIG. 5(b) und (d) sind die in FIG. 4 (b) und (c) dargestellten Abtastwertfolgen $p(t)_{AV}$ und $p(t)_{BV}$ über einen Empfangszeitraum von mehr als zwei Radarperioden eingetragen und jeweils darunter die sich bei Korrelation mit der Mismatched Filterfunktion (FIG. 5 (a)) ergebenden Filterausgangssignale, die jeweils im Abstand einer Radarperiode wiederholt einen Hauptwert mit, wie vorausgesetzt, innerhalb der Radarperiode unterschiedlicher zeitliche Lage und, wie durch die Eclipsing-Situation für $p(t)_{BV}$ zu erwarten, unterschiedlichen Amplituden der Hauptwerte aufweist. Durch die spezielle Wahl der Filterkoeffizienten verschwinden alle Nebenwerte im Filterausgangssignal, was leicht ersichtlich für den Anwendungsfall von ganz besonderem Vorteil ist. Da, wie bereits erläutert, die relative zeitliche Lage der periodischen Abtastwertfolge bezüglich der Sendeimpulsfolge und damit auch die relative zeitliche Lage der Hauptwerte der komprimierten Empfangssignale innerhalb der Radarperioden von der Zielentfernung abhängig ist, stellen die N Teilintervalle der Radarperioden für die Filterausgangssignale Entfernungstore dar. Von einem echten Radarziel mit i.a. geringer Ausdehnung herrührende Echosignale führen dann nur in einem oder wenigen Entfernungstoren zu bedeutenden Werten im Filterausgangssignal. Im Vergleich zum HPRF-Radar führt das unverändert hohe Tastverhältnis zu einer gleichbleibend großen Zielentdeckungsreichweite im Rauschen und die Einführung von Entfernungstoren zu einer Verbesserung des S/C-Verhältnisses und damit zu einer Erhöhung der Zielentdeckungswahrscheinlichkeit im Clutter.

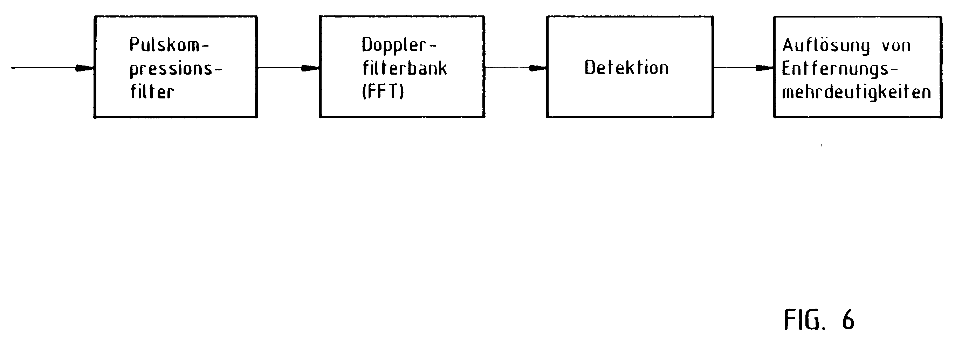

FIG. 6 zeigt in Blockschaltbildform die wesentlichen Signalverarbeitungsstufen. Am Eingang des Pulskompressionsfilters ist das Empfangssignal ein gegenüber dem Sendesignal lediglich zeitverzögertes und evtl. dopplerfrequenzmoduliertes komplexes periodisches Signal mit der bei FIG. 4 erläuterten grundsätzlichen Struktur. Gegenüber dem in den gezeigten Beispielen betrachteten einfachen Signalsituationen überlagern sich im Realfall im Empfangssignal additiv die Echos von vielen Reflexionsobjekten als Zielechos und Störechos sowie Rauschen. In dem digitalen Pulskompressionsfilter wird das Empfangssignal in auf verschiedene Entfernungstore aufgeteilte Signalanteile getrennt. Die den einzelnen Entfernungstoren zugeordneten N komplexen Werte je Radarperiode werden nach Entfernungstoren sortiert, so daß für ein M Radarperioden umfassendes kohärentes Verarbeitungsintervall (CPI) für N Entfernungstore getrennt jeweils M komplexe Werte vorliegen. Für jedes Entfernungstor getrennt werden die M Werte einer Dopplersignalverarbeitung zur Zielentdeckung und Bestimmung der Zieldopplerfrequenz unterzogen. Die Dopplersignalverarbeitung erfolgt nach dem auch beim HPRF-Radar gebräuchlichen Verfahren, beispielsweise unter Anwendung der schnellen Fourier-Transformation (FFT) auf die Wertegruppe innerhalb korrespondierender Entfernungstore. Durch die Aufteilung in Entfernungstore liegt für die bei der Dopplersignalverarbeitung detektierten Ziele auch eine hochaufgelöste, aber vieldeutige Entfernungsinformation vor. Durch Umschaltung der Radarperiodendauer von CPI zu CPI ergeben sich verschiedene, jeweils vieldeutige Entfernungswerte, aus denen nach bekannten Verfahren (z.B. /3,4/) eine in einem weiten Entfernungsbereich eindeutige Zielentfernung bestimmt wird.

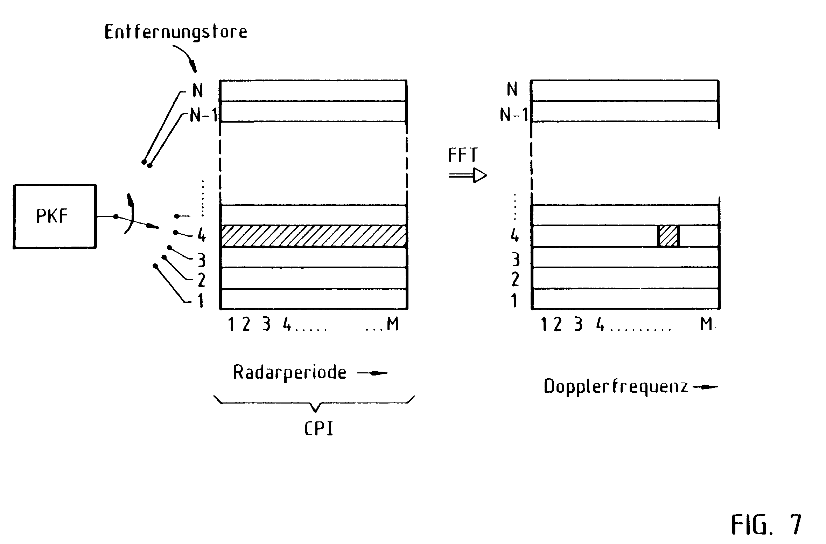

Die Skizze nach FIG. 7 veranschaulicht, daß die je Radarperiode anfallenden N Ausgangswerte des Pulskompressionsfilters PKF sukzessive den N Entfernungstoren zugeteilt werden. Für jede der M Radarperioden eines kohärenten Verarbeitungsintervalls wird die Reihe der Entfernungstore erneut durchlaufen und jeweils ein Filterausgangswert zugeteilt, so daß ein in Entfernung und Zeit sortiertes Feld komplexer Werte entsteht. Jede Wertereihe bildet für sich ein Zeitsignal aus diskreten Werten im Abstand einer Radarperiode. Für jedes Entfernungstor getrennt wird dieses Zeitsignal mit M Werten mittels eines FFT-Vorgangs in ein Dopplerfrequenzspektrum mit gleichfalls M diskreten Werten transformiert. Die von einem Zielecho herrührenden Echosignale tauchen in dem Wertefeld der Zeitsignale in der gesamten Wertereihe eines Entfernungstors (schraffiert), aber nur noch in einem Wert des durch die N Spektren gebildeten Wertefeldes auf. Die FFT kann je nach Rechnerleistung für alle Entfernungstore parallel oder im Zeitmultiplex erfolgen.

## Literatur

/1/ Long, W.H., Harriger, K.A., Medium PRF für the AN/APG-66 Radar,
Proceedings of the IEEE, Vol. 73,
No. 2, Febr. 1985, pp. 301 - 311
/2/ Nevin, R.L., Schatz, F.W., AN/APG-67 Multimode Radar,
IEEE Inter. Radarconference, Washington, 1985
/3/ Hovanessian, S.A., An Algorithm for Calculation of Range in a Multiple PRF Radar,
IEEE-AES-12, No. 2 (March 1976), pp. 287 - 290
/4/ Rohling, H., Resolution of Range and Doppler Ambiguities in Pulse Radar Systems,
Proceedings of Digital Signal Processing-87,
Florence, 1987

## Patentansprüche

1. Pulsdopplerradar mit innerhalb eines Intervalls kohärenter Signalverarbeitung, wobei
   - ein Intervall aus einer Vielzahl M von Radarperioden der Periodendauer T besteht,
   - jede Radarperiode identische Sendesignale enthält,
   - die Sendesignale codiert sind,

- empfangene Echosignale abgetastet und
- die Abtastwerte einer Dopplersignalverarbeitung unterzogen werden, <u>dadurch gekennzeichnet,</u>
- daß das Sendesignal die gesamte Radarperiode ausfüllt,
- daß das Sendesignal innerhalb der Radarperiode aus einer Mehrzahl N zeitlich getrennter Pulse besteht mit einer Pulsfolgezeit $t_p$=T/N und einer Pulsdauer $\tau$<T/(2·N),
- daß innerhalb des Sendesignals die Pulsfolge codiert ist durch mögliche Vorzeichenwechsel der Amplituden benachbarter Pulse,
- daß zwischen je zwei Pulsen ein Abtastwert des Empfangssignals gewonnen wird,
- daß das Empfangssignal der Radarperiode aus N Abtastwerten zusammengesetzt ist,
- daß aufeinanderfolgende Abtastwerte in einem Pulskompressionsfilter mit einer impulskomprimierenden Filterfunktion korreliert werden, so daß zu den N Abtastwerten gehörige N Filterausgangswerte entstehen,
- daß die innerhalb einer Radarperiode entstehenden N Filterausgangswerte sukzessive in je einen von N Entfernungstorspeichern eingeschrieben werden und
- daß für jeden Entfernungstorspeicher getrennt für die abgespeicherten Filterausgangswerte aller M Radarperioden eines Intervalls die Dopplersignalverarbeitung durchgeführt wird.

2.  Dopplerradar nach Anspruch 1, dadurch gekennzeichnet, daß die Codierung der Pulsfolge von Intervall zu Intervall veränderbar ist.

3.  Dopplerradar nach Anspruch 1 oder 2, dadurch gekennzeichnet, daß die Pulsfolge eines Sendesignals nach einem digitalen Codewort codiert ist.

4.  Dopplerradar nach Anspruch 3, dadurch gekennzeichnet, daß die Sendesignale binär phasencodiert sind.

5.  Dopplerradar nach Anspruch 4, dadurch gekennzeichnet, daß für Codeworte, bei deren über die diskrete Fouriertransformation (DFT) zugeordnetem Spektrum für alle Spektralkoeffizienten $Z_n$ (n = 0, 1, 2 ... N-1) das Betragsquadrat

$$\left| Z_n \right|^2 = \frac{1}{N^2} \sum_{l=0}^{N-1} \sum_{m=0}^{N-1} c_l \cdot c_m \cdot \exp\left(-j \cdot 2\pi \cdot \frac{n}{N} (l-m)\right)$$

ungleich Null ist, die Filterkoeffizienten $w_k$ die Werte

$$w_k = F \cdot \sum_{n=0}^{N-1} \left\{ \frac{1}{\left| Z_n \right|^2} \sum_{p=0}^{N-1} Z_p \cdot \exp\left(j \cdot 2\pi \cdot \frac{n}{N} \cdot p\right) \right\} \cdot \exp\left(j \cdot 2\pi \cdot \frac{n}{N} \cdot k\right)$$

aufweisen, wobei bei allen Summen die Summation über die Indexwerte Null bis (N-1) erfolgt und F ein für alle k konstanter Faktor ist.

6.  Pulsdopplerradar nach einem der Ansprüche 1 bis 5, dadurch gekennzeichnet, daß die Periodendauer T kleiner als 10 μs ist.

7.  Pulsdopplerradar nach einem der Ansprüche 1 bis 6, dadurch gekennzeichnet, daß die Periodendauer von Intervall zu Intervall variierbar ist.

## Claims

1.  Pulse Doppler radar with signal processing coherent within an interval, wherein
    - an interval consists of a plurality M of radar periods of the period duration T,
    - each radar period contains identical transmitted signals,
    - the transmitted signals are coded,
    - received echo signals are scanned and

- the scanning values are subjected to a Doppler signal processing, characterised thereby,
- that the transmitted signal fills out the entire radar period,
- that the transmitted signal within the radar period consists of a plurality N of pulses separated in time with apulse repetition period tp = T/N and a pulse duration $\tau < T(2.N)$,
- that the pulse sequence within the transmitted signal is coded by possible changes in sign of the amplitudes of adjacent pulses,
- that a scanning value of the received signal is obtained between each two pulses,
- that the received signal of the radar period is composed of N scanning values,
- that successive scanning values are correlated in a pulse compression filter with a pulse-compressing function so that N filter output values belonging to the N scanning values arise,
- that the N filter output values arising within a radar period are written successively into a respective one of N distance gate storage devices and
- that the Doppler signal processing is performed for the stored filter output values of all M radar periods of an interval separately for each distance gate storage device.

2. Doppler radar according to claim 1, characterised thereby, that the coding of the pulse sequence is variable from interval to interval.

3. Doppler radar according to claim 1 or 2, characterised thereby, that the pulse sequence of a transmitted signal is coded according to a digital code word.

4. Doppler radar according to claim 3, characterised thereby, that the transmitted signals are binary-coded in phase.

5. Doppler radar according to claim 4, characterised thereby, that for code words, for which the squared modulus

$$\left| Z_n \right|^2 = \frac{1}{N^2} \sum_{l=0}^{N-1} \sum_{m=0}^{N-1} c_l \cdot c_m \cdot \exp\left(-j \cdot 2\pi \cdot \frac{n}{N}(1-m)\right)$$

is not equal to zero for all spectral co-efficients ($Z_n = 0, 1, 2$ to N-1) in their spectrum associated by way of the discrete Fourier transformation (DFT), the filter co-efficients $w_k$ display the values

$$w_k = F \cdot \sum_{n=0}^{N-1} \left\{ \frac{1}{\left| Z_n \right|^2} \sum_{p=0}^{N-1} Z_p \cdot \exp\left(j \cdot 2\pi \cdot \frac{n}{N} \cdot p\right) \right\} \cdot \exp\left(j \cdot 2\pi \cdot \frac{n}{N} \cdot k\right)$$

wherein the summation takes place over the index values of 0 to N-1 for all sums and F is a factor constant for all k.

6. Pulse Doppler radar according to one of the claims 1 to 5, characterised thereby, that the period duration T is less than 10 microseconds.

7. Pulse Doppler radar according to one of the claims 1 to 6, characterised thereby, that the period duration is variable from interval to interval.

**Revendications**

1. Radar Doppler à impulsions, utilisant un traitement de signal cohérent à l'intérieur d'un intervalle, dans lequel
   - un intervalle est constitué d'une pluralité M de périodes radar ayant la durée de période T,
   - chaque période radar contient des signaux d'émission identiques,
   - les signaux d'émission sont codés,
   - les signaux d'écho reçus sont échantillonnés et les échantillons sont soumis à un traitement de signal

Doppler, <u>caractérisé en ce</u>

- que le signal d'émission remplit toute la période radar,
- que le signal d'émission est constitué, à l'intérieur de la période radar, d'une pluralité N impulsions séparées dans le temps, ayant un temps de succession des impulsions $t_p$ = T/N et une durée d'impulsion $\tau$ < T/(2 N),
- que la suite d'impulsions à l'intérieur du signal d'émission est codée par le changement possible du signe des amplitudes d'impulsions voisines,
- qu'un échantillon du signal de réception est obtenu entre chaque fois deux impulsions,
- que le signal de réception de la période radar est composé de N échantillons,
- que des échantillons successifs sont corrélés, dans un filtre de compression d'impulsions, avec une fonction de filtrage de compression d'impulsions, de manière que N valeurs de sortie de filtre appartenant aux N échantillons soient créées,
- que les N valeurs de sortie de filtre créées dans une période radar sont inscrites successivement, chaque fois dans l'une de N mémoires de portes de distance et
- que le traitement de signal Doppler est effectué séparément pour chaque mémoire de porte de distance pour les valeurs de sortie de filtre mémorisées de toutes les M périodes radar d'un intervalle.

2. Radar Doppler selon la revendication 1, caractérisé en ce que le codage de la suite d'impulsions est variable d'intervalle à intervalle.

3. Radar Doppler selon la revendication 1 ou 2, caractérisé en ce que la suite d'impulsions d'un signal d'émission est codée selon un mot de code numérique.

4. Radar Doppler selon la revendication 3, caractérisé en ce que les signaux d'émission sont codés binaire en phase.

5. Radar Doppler selon la revendication 4, caractérisé en ce que, pour des mots de code dont le spectre coordonné par la transformation de Fourier discrète possède, pour tous les coefficients spectraux $Z_n$ (n = 0, 1, 2 ... N-1) une grandeur au carré

$$\left| Z_n \right|^2 = \frac{1}{N^2} \sum_{l=0}^{N-1} \sum_{m=0}^{N-1} c_l \cdot c_m \cdot \exp\left(-j \cdot 2\pi \cdot \frac{n}{N}(l-m)\right)$$

qui n'est pas nulle, les coefficients de filtre $w_k$ présentent les valeurs

$$w_k = F \cdot \sum_{n=0}^{N-1} \left\{ \frac{1}{\left| Z_n \right|^2} \sum_{p=0}^{N-1} Z_p \cdot \exp\left(j \cdot 2\pi \cdot \frac{n}{N} \cdot p\right) \right\} \cdot \exp\left(j \cdot 2\pi \cdot \frac{n}{N} \cdot k\right)$$

où, pour toutes les sommes, la sommation s'effectue sur les valeurs d'indice nulle à (N-1) et F est un facteur constant pour tous les k.

6. Radar Doppler à impulsions selon une des revendications 1 à 5, caractérisé en ce que la durée de pétriode T est plus petite que 10 μs.

7. Radar Doppler à impulsions selon une des revendications 1 à 6, caractérisé en ce que la durée de période est variable d'intervalle à intervalle.

FIG. 1

(a)

$s_L(t)$

1 Radarperiode

$0$ $1\mu s$

$1000\mu s$

$t$

(b)

$e_L(t)$

1 2 3 4 5 ...

1 2 3 4 5 ...

Entfernungstore

$t$

FIG. 2

EP 0 336 273 B1

EP 0 336 273 B1

Pulslänge

1 Radarperiode

$S_H(t)$

0  2µs  5µs  t

$e(t)_{AH}$

$p(t)_{AH}$

$e(t)_{BH}$

$p(t)_{BH}$

HPRF

FIG. 3

FIG. 4

Pulsabstand

1 Radarperiode

$S_V(t)$

+

−

0 100ns

5µs

t

$p(t)_{AV}$

τ

t

$p(t)_{BV}$

t

(a)

(b)

(c)

EP 0 336 273 B1

Korrelator                                                                    (a)
                                                                              k

$p(t)_{AV}$                                                                   (b)
                                                                              t

PKKF$_{AV}$                                                                   (c)
1 2 3 4 ...                              N 1 2 3                    N 1

$p(t)_{BV}$                                                                   (d)

PKKF$_{BV}$                                                                   (e)
1 2 3 4 ...                              N 1 2 3 4 ...              N 1

|← 1 Radarperiode →|    Entfernungstore

FIG. 5

16

EP 0 336 273 B1

EP 0 336 273 B1

| Pulskom-<br>pressions-<br>filter | | Doppler-<br>filterbank<br>(FFT) | | Detektion | | Auflösung von<br>Entfernungs-<br>mehrdeutigkeiten |

FIG. 6

FIG. 7